# EUROPEAN PATENT SPECIFICATION

(11) **EP 4 330 538 B1**
(45) Date of publication and mention of the grant of the patent: **15.10.2025**
(21) Application number: 22726639.2
(22) Date of filing: 29.04.2022
(51) Int. Cl.: F03D 1/04

(54) **WIND GUIDE SYSTEM COMPRISING MODULES**
WINDFÜHRUNGSSYSTEM MIT MODULEN
SYSTÈME DE GUIDAGE DE VENT COMPRENANT DES MODULES

(30) Priority: 29.04.2021 DK PA202100439
(43) Date of publication of application: 06.03.2024
(73) Proprietor: Winnowave SL, 28016 Madrid (ES)
(72) Inventor: GRABAU, Peter, 6000 Kolding (DK)
(74) Representative: Garcia González, Sergio
(86) International application number: PCT/EP2022/061520
(87) International publication number: WO 2022/229407

(56) References cited:
- WO-A1-2016/020709
- JP-A- H11 270 455
- KR-A- 20090 112 358
- KR-A- 20120 136 198
- US-A1- 2009 297 332
- US-A1- 2020 300 213

## Description

### Technical field and Introduction

The present invention is in the technical field of wind power engineering and wind farm design & wind farm construction. It relates to a system and a method for designing, manufacturing, transporting, erecting, and moving a wind guide system to be located in wind farms. The wind guide system is installed for artificially optimizing the wind conditions in wind farms to increase the energy production rate of wind turbines and decrease cost of energy. The wind guide system and the wind turbine together are defined as a wind turbine system.

The operational conditions of such wind guide systems are very demanding: The wind guide system needs to withstand very high loads due to the effect of wind, which can be expected to be very strong as we only intend to use these wind guide systems in wind farms. They typically need to be tall to maximize the production of turbines of the size and height that we often see today, which poses technical and cost challenges, for the taller the structure, the higher wind loads it will need to withstand. Apart from wind, the wind guide system also needs to withstand rain, hail, blizzard, snow, extreme temperatures, dust storms and other extreme weather events. Additionally, every wind farm has unique design (including wind turbines location and other elements like roads, platforms, etc), location, topography and geotechnical characteristics. Being cost-efficient and practical in such circumstances is not straightforward and requires notable efforts around wind farm design requirements, wind farm construction requirements and product development.

The present invention more particularly relates to exploiting several advantages by using specific wind guide system designs and erection methods. The wind guide system is built from modules to save overall manufacturing costs of the wind guide system and to save transportation costs for transporting the wind guide system modules efficiently to the wind turbine sites which are often located very far from cities at very remote locations. The module system also results in reduced installation costs primarily caused by reduced installation time. A wind guide system is expected to function at a wind turbine between 2 years (when installed at an existing wind turbine) and 20 years (when installed together with the wind turbines in a new wind farm), so the module systems as disclosed in the present invention disclosure, also results in significantly reduced overall costs when the wind guide systems are moved from one wind turbine site to another. Today's new wind turbines are also assembled from modules to some extent, but the wind turbine modules are so large and/or heavy that they often need special transports that increase the transportation costs significantly. In the present invention disclosure, it is described how the individual modules can be designed for a cheaper transportation by standard size trucks.

Additionally, the module system can be adapted to irregular terrains and many wind turbines around the world are currently located at such sites. In the present invention disclosure, it is also described how different standardized modules may be used which is good for the global availability since standardized modules are more likely to be manufactured close to the wind farm, which again will save transportation distances and thereby transportation costs and reduce CO2 emission from transporting the wind guide system. Also, it is described how the standardized modules will ease installation by reducing complexity and increase the probability that the modules may be re-used for other purposed after dismantling the wind guide system. Standardized modules are likely to contain standardized materials which again will improve the likelihood of the wind guide system to be re-cycled after dismantling in case the wind guide system itself cannot be re-used.

### Prior art

Document WO2019081563A1 discloses a wind guide system for guiding the wind in front of and/or above a wind turbine from a first direction to a second direction. The wind guide system comprises a wind guide arranged and configured to receive wind in front of and/or above a wind turbine and to change the direction of the wind so that the wind leaving the wind guide has another direction than the wind received by the wind guide. The wind turbine comprises a tower and a rotor provided with a number of rotor blades. The wind guide is arranged and configured to change the direction of the wind so that the wind leaving the wind guide will increase the wind speed of the wake behind the rotor by adding or leading some of the surrounding wind into the wake.

Document US2009295164A1 discloses a method of increasing the output of a wind turbine, wherein one or more flow surfaces are placed at a wind turbine. At lower wind speeds, the flow surfaces are set to guide the wind up towards and/or out from the rotor of the wind turbine and hence use the venturi effect in the rotor to advantage. At higher wind speeds, the flow surfaces are completely or partially taken out of the flow of the wind. Moreover, the flow surfaces can be adjusted around the wind turbine based on measurements of the speed of the wind and direction of the wind and/or the power signal of the wind turbine. The invention further relates to a system comprising one or more flow surfaces and means for adjusting same to the effect that the output of a wind turbine can be maximised by using the venturi effect to advantage as described above.

The prior art describes the physical principles and high-level realizations that enables the wind guide systems to increase wind turbine production by guiding wind flow towards the rotor and the wake of the turbine.

However, energy production is not the only driver to make such wind guide system optimal for market implementation. Wind Guide Systems also need to be very cost competitive, maximizing the transportation and installation simplicity, complying with building codes, maximizing reusability & recyclability, and maximizing its adaptation to the environment.

The prior art describes structures composed of few (less than 5), large and unstandardized components, which can be suboptimal for market introduction and project execution.

The present invention makes use of extensive product research & development to tackle the potential for optimization compared to the state of the art in relation to material cost, ease of transport & installation, building code compliance, reusability & recyclability and adaptation to environment.

### Object of the invention

It is therefore an object of the present invention to provide a system and a method including a wind guide system to guide the wind into an area in front of and/or behind the wind turbine rotor to improve the wind turbine energy production rate by providing a wind guide system comprising a larger number of modules, potentially standardized, substantially to save overall wind guide system costs, installation time and installation costs on the wind turbine site, manufacturing costs, and to enable easy removal and re-installation of the wind guide system - at least partly - at another wind turbine located at another position.

It is another object of the present invention to provide a system and a method to transport the wind guide system easily and economically to the wind turbine site.

It is a further object of the present invention to provide a system and a method to exploit economy of scale by using modules for the wind guide system, that are manufactured in large numbers, either for other purposes or for the purpose of providing a wind guide system and thereby saving manufacturing costs.

**It** is yet another object of the present invention to provide a system and a method to reuse or recycle or upcycle modules (for example, used sheet piles, used shipping containers, or straw bales) that have already been used for other purposes, and therefore are cheaper than new modules, since this implies using less resources and thereby benefitting the environment and the earth's climate.

**It** is another object of the present invention to provide a system and a method to use modules that can be used for a different purpose after having been installed for a time period at a wind turbine.

**It** is a further object of the present invention to provide a system and a method to reduce or eliminate the needs for support structures to withstand the wind loads onto the wind guide system and thereby reduce costs of the wind guide system and reduce costs of moving the wind guide structure to another wind turbine or wind turbine site.

**It** is yet another object of the present invention to provide a system and a method to reduce or eliminate the needs for support structures to withstand the wind loads onto the wind guide system and at the same time shape the wind guide system so that it is aerodynamically more optimized for different wind directions.

**It** is another object of the present invention to provide a system and a method to simplify the installation of the wind guide system, and thereby limit the resources needed to train workers and site managers, and thereby reduce risks of installation mistakes and people injuries and to ease future globalization of the wind guide system concept.

**It** is a further object of the present invention to provide a system and a method to easily lock the modules to each other and to easily take the modules apart.

It is a further object of the present invention to provide a system that can be used for short-term (less than 2 years) testing purposes.

It is a further object of the present invention to provide a system that can be constructed to avoid blocking the free access for people, animals, vehicles, cranes, trucks, boats, road transports, paths transports and/or river transports thanks to its modularity.

### Summary of the invention

A first aspect of the invention discloses a wind turbine system according to claim 1, comprising a wind guide system and a wind turbine. The wind guide system comprising at least 10 modules for guiding the wind in front of the wind turbine from a first direction to a second direction. The wind turbine comprising a tower and a rotor provided with a number of rotor blades defining a rotor swept area. The wind guide system comprising a ground-based, seabed-based, or floating wind guide with a horizontal length of at least 60 meters, a vertical height of at least 5 meters, a horizontal width and with at least two ends, arranged and configured to receive wind from an altitude below the rotor swept area and to direct the wind, so that the second direction of the wind leaving the wind guide system is different than the first direction of the wind received by the wind guide system. The wind guide system is arranged and configured to direct the wind to an area in front of and/or behind the rotor swept area. Considering this wind guide system, a number of specific modular realizations can be implemented to make the Wind Guide System comply with the Object of the invention.

In another realization of the invention, slender modules (comprising a vertical height, a horizontal width, and a horizontal thickness) having a vertical height much longer than the horizontal width of the module, are employed.

**In** another realization, the modules are sheet piles inserted vertically by mechanical means into the ground or seabed or anchored to a floating structure.

**In** another realization, the modules are load-bearing piles, potentially standardized, anchored into the ground, seabed or floating structure, and which comprise other modules, vertically or horizontally installed sheets, potentially standardized sheets or sheet piles.

**In** another realization, the modules are standard transport containers, located on the ground or anchored to a floating structure, erecting a structure with the object of the invention.

**In** another realization, the modules are plant products compressed into bales that are supported on the ground, such bales erecting a structure with the object of the invention.

**In** yet another realization, the design of the wind guide system comprising modules includes a gap between the modules to avoid blocking the free access for people, animals, vehicles, cranes, trucks, boats, road transports, paths transports and/or river transports. **In** yet another embodiment of the invention, the horizontal distance between those modules to avoid blocking such free access is covered with a detachable or withdrawable tarpaulin or any other flexible material to allow temporarily such free access.

### Brief description of the figures

The invention will be better understood by reading the following description, given solely by way of non-limiting examples and with reference to the drawings, in which:
Fig. 1 shows a wind guide system in front of a wind turbine. The wind guide system comprises at least 10 modules that are stacked to form a wind guide system.
Fig. 2 shows a wind guide system in front of a wind turbine. The wind guide system comprises at least 10 modules and it is preferably oriented perpendicular to the ground or seabed within a tolerance of +/- 10 degrees.
Fig. 3 shows a wind guide system in front of a turbine. The wind guide system comprises at least 10 modules and the modules comprise standardized modules.
Fig. 4 shows a wind guide system in front of a turbine. The wind guide system comprises at least 10 modules and the modules comprise shipping containers.
Fig. 5 shows a wind guide system in front of a turbine. The wind guide system comprises at least 10 modules and the modules comprise plant product parts that are compressed into bales.
Fig. 6 shows a wind guide system in front of a turbine. The wind guide system comprises 2 different modules. The wind guide system comprises at least 10 modules comprising shipping containers and at least 10 modules comprising a fabric structure.
Fig. 7 shows a wind guide system in front of a turbine. The wind guide system comprises at least 10 modules. The wind guide system is supported by guide wires anchored into the ground for the wind guide system to withstand the forces from the wind, substantially at high wind speeds.
Fig. 8 shows a wind guide system in front of a turbine. The wind guide system comprises at least 10 modules. The modules are arranged in a non-linear shape to increase the stability of the wind guide system, so that it can withstand higher wind loads and thereby limit the needs for support structures.
Fig. 9 shows a wind guide system in front of a wind turbine. The wind guide system comprises at least 10 modules. The modules are arranged in 2 linear shaped parts angled toward each other to increase the stability of the wind guide system, so that it can withstand higher wind loads and thereby limit the needs for support structures.
Fig. 10 shows a wind guide system in front of a wind turbine. The wind guide system is ground- or seabed-based and comprises at least 10 wind guide system modules, each module having a vertical height exceeding 4 times the horizontal width of the module.
Fig. 11 shows a wind guide system in front of a wind turbine. The wind guide system comprises interlocked sheet piles.
Fig. 12 shows 7 different types of load-bearing piles and/or sheet piles.
Fig. 13 shows a wind guide system in front of a wind turbine. The wind guide system comprises interlocked sheet piles situated in a rough terrain like a mountain terrain.
Fig. 14 shows a section of a wind guide system comprising substantially vertical load-bearing piles and substantially horizontal modules in between the substantially vertical load-bearing piles.
Fig. 15 shows a crane mounting a pile by pressing or vibrating the pile into the ground or seabed.
Fig 16 shows an offshore wind farm with 2 wind guide systems situated close the two turbines at the edge of the wind farm. The wind guide systems comprise piles partly positioned into the seabed.
Fig. 17 shows an example of a wind guide system built from substantially equally sized and equally shaped straw bales. The wind loads are higher close to the ends of the wind guide system and therefore the wind guide system is wider close to the ends.
Fig. 18 shows the main dimensional parameters of the wind guide system: Wind Guide System Horizontal Length, Wind Guide System Vertical Height, Wind Guide System Horizontal Width.
Fig. 19 shows an example of load-bearing pile realization with footing foundations that anchor to the ground the load-bearing piles, which in turn support the infill sheets. It also shows a supporting structure consisting of struts supported on an additional foundation, as well as stabilizing elements like the St. Andrews cross.

### List of reference numbers

- 1: Wind Turbine
- 2: Wind Turbine Blade
- 3: Tower
- 4: Rotor Swept Area
- 5: Wind
- 6: Wind Guide System, Wind Guide
- 7: Module
- 8: Module, Standardized
- 9: Module, Shipping Container
- 10: Module, Bale
- 11: Module, Fabric Structure
- 12: Support Structure
- 13: Ground or Seabed
- 14: Sheet Pile / Load Pile
- 15: I-Beam Cross Section Profile
- 16: H-Beam Cross Section Profile
- 17: Interlocking Edges
- 18: Hat + H Profiles
- 19: Cross Section of Hat + H-Profiles
- 20: Omega Cross Section Profile
- 21: Z-Cross Section Profile
- 22: Tightening and/or bonding between sheet piles
- 23: Two Omega Profile Sheet Piles in Between Tubes
- 24: Mountain terrain
- 25: Crane
- 26: Vibrator Unit / Mass Unit
- 27: Wind Guide System Horizontal Length
- 28: Wind Guide System Vertical Height
- 29: Wind Guide System Horizontal Width
- 30: Infill Sheet of sheet material
- 31: St Andrew's Cross
- 32: Foundation
- 33: Strut

### Detailed description of preferred embodiments

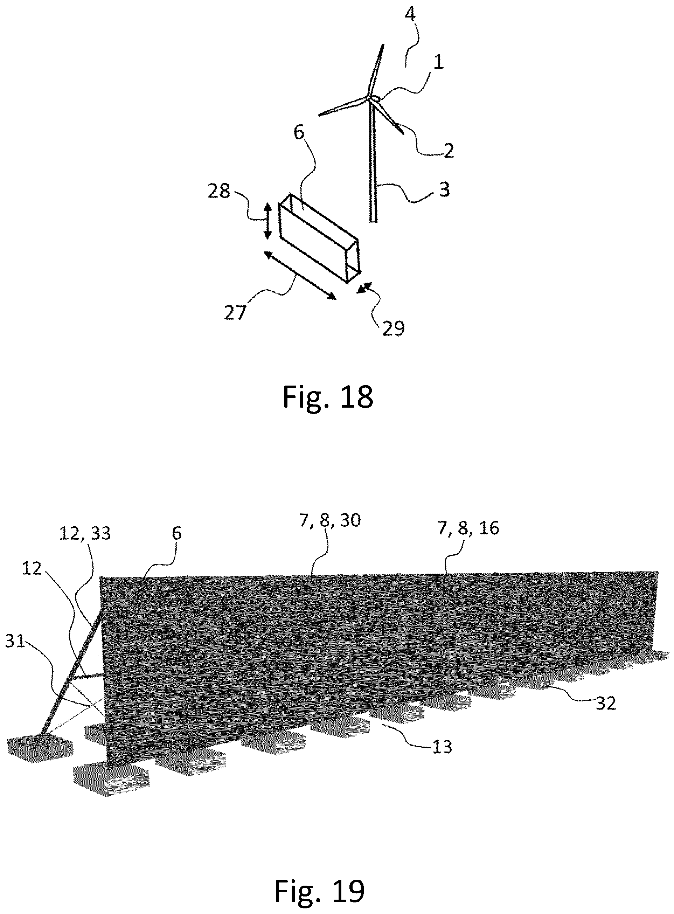

A first aspect of the invention discloses a wind turbine system comprising a wind guide system and a wind turbine. The wind guide system comprising at least 10 modules for guiding the wind in front of the wind turbine from a first direction to a second direction. The wind turbine comprising a tower and a rotor provided with a number of rotor blades defining a rotor swept area. The wind guide system comprising a ground-based, seabed-based, or floating wind guide with (see Fig. 18) a horizontal length (defined as the distance between the two ends of the wind guide system) of at least 60 meters, a vertical height (defined as the distance between the ground or sea surface and the top-most part of the wind guide system) of at least 5 meters, a horizontal width (distance between the upwind surface and downwind surface of the wind guide system) and with at least two ends, arranged and configured to receive wind from an altitude below the rotor swept area and to direct the wind, so that the second direction of the wind leaving the wind guide system is different than the first direction of the wind received by the wind guide system. The wind guide system is arranged and configured to direct the wind to an area in front of and/or behind the rotor swept area.

The wind guide system include the following dimensions as described above: a horizontal length of at least 60 meters and a vertical height of at least 5 meters. These dimensions result from our research & development activities to make wind guide systems competitive enough in the present wind industry. Wind guide systems not complying with such dimensions may not be competitive enough.

Considering these dimensions, and the dimensions of a standard truck semitrailer (12-meter-long, 2,4-meter-wide), the global minimum number of modules will already be 10. Additionally, other modular realizations can be implemented to make the wind guide system comply with the object of the invention.

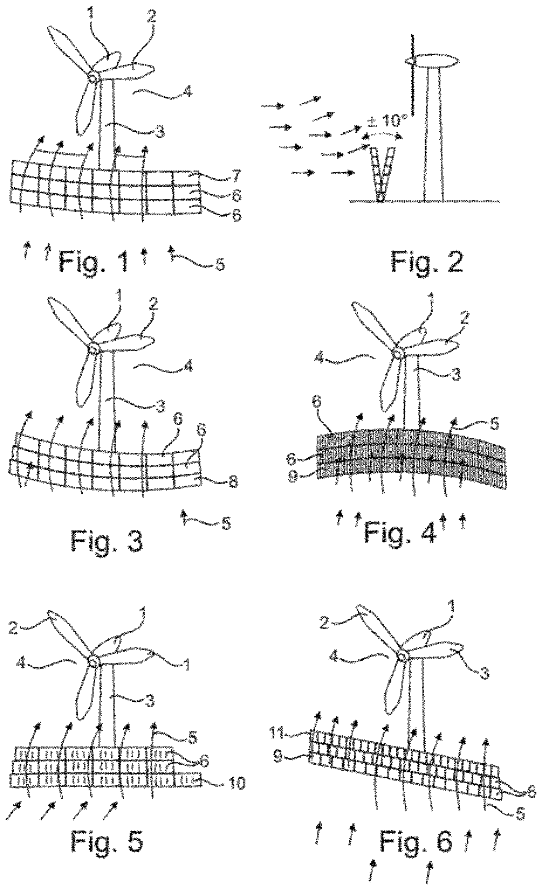

As an initial realization, Fig. 1 shows a wind turbine with a wind guide system, where the wind guide system is built of modules. The modules are substantially equally sized, and they are designed so they can be easily assembled at the wind turbine site. The modules might comprise structural materials like steel, reinforced plastics, concrete, steel reinforced concrete, plants, wood, composite materials, soil, tails, rocks or in any combination of these materials.

The wind deflection towards the wind turbine rotor in fig. 1, is shown with arrows.

Fig. 2 shows a side view of a wind turbine and a wind guide system. The wind guide system is preferably substantially perpendicular to the ground or seabed, and the figure shows a wind guide system that is fixed in this position within the range of +/- 10 degrees relative to perpendicular to the ground or seabed. CFD calculations and full-scale research has shown a close to optimal efficiency of the wind guide system when it is substantially vertically oriented. The wind deflection towards the wind turbine rotor is shown with arrows.

Fig. 3 shows a wind turbine with a wind guide system, where the wind guide system is built of modules. The modules are substantially equally sized, and they are designed so they can be easily assembled at the wind turbine site. The modules comprise standard modules. This could be existing standard modules, or it could be new modules that later becomes standard for modules for wind guide systems. The standardization could be related to the geometry of the standard module, the assembly principles of the standard modules, the assembly fittings of the standard modules, the handling principle of the standard modules, the transportation principle of the standard modules or other features that implies cheaper or faster manufacturing, transportation and/or erection of the wind guide system built from standard modules.

In another realization of the invention, slender modules (comprising a vertical height, a horizontal length, and a horizontal width) having a vertical height exceeding any number between 4 and 40 times the horizontal width of the module, are employed.

In still another embodiment of the invention, the wind guide system has at least 10 slender modules having a vertical height exceeding 5, 6, 7, 8, 9, 10, 15, 20, 25, 30, 35, 40, 45, 50, 55, 60, 65, 70, 75, 80, 85, 90, 95, 100, 105, 110, 115, 120, 125, 130, 135, 140, 145, 150, 155, 160, 165, 170, 175, 180, 185. 190, 195 or 200 times the module's horizontal width.

In still another embodiment of the invention, the wind guide system comprises modules comprising interlocking vertical edges or any other means to interlock the modules.

In another realization, referred to as SHEET PILE REALIZATION, the modules are sheet piles inserted vertically by mechanical means into the ground or seabed or anchored in a floating structure.

Sheet piles are sections of sheet materials with interlocking edges that are driven into the ground for different objectives than the ones concerning the present invention: provide earth retention and excavation support. Sheet piles are most commonly made of steel, but can also be formed of timber, reinforced concrete, aluminum, wood and composite plastic material. Sheet piles are commonly used for retaining walls, land reclamation, underground structures such as car parks and basements, in marine locations for riverbank protection, seawalls and cofferdams. The term pile should be understood widely to also include other structural components that are not named piles in the civil engineering literature.

Such sheet piles can be standardized (i.e.: following known technical standards) and off-the-shelf in the product portfolio of current manufacturers all around the world. Some non-limitative examples include steel sheet pile profiles like PAZ 5680, PAZ 5560, PAZ 4650, PAZ 4550, PZE 37-CP, PZC25, PZC18, PZC12, AZ38-700N, AZ23-800, AZ18-800, AZ12-770, AZ32-750, AZ19-700, AZ17-700, AZ12-770.

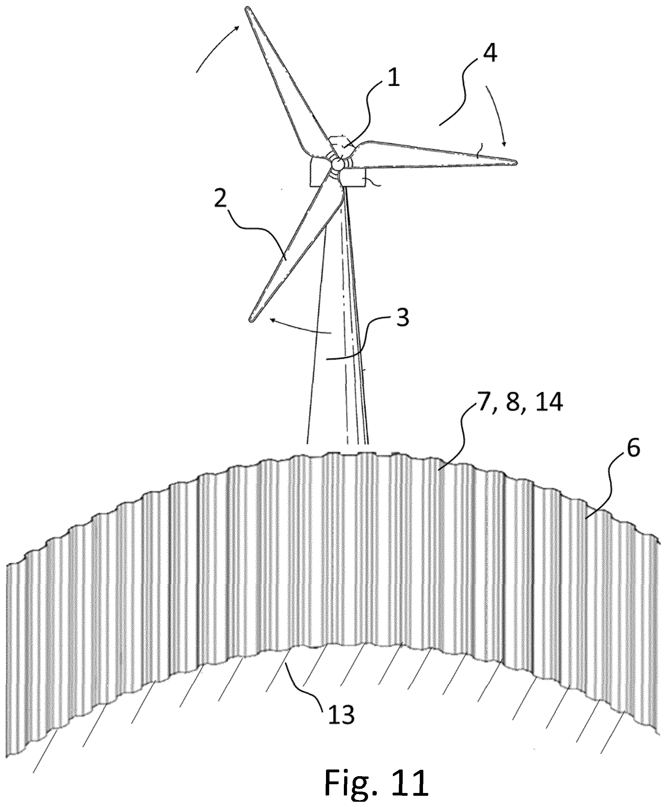

The interlocking system of sheet piles provide the possibility to insert consecutive sheet piles with a certain angle in respect to each other, being therefore possible to design the wind guide system with a certain parabolic or at least non-straight shape like the one illustrated in Fig. 11. Such non-straight shape is beneficial to speed up wind through the rotor of the wind turbine more effectively in certain wind conditions and/or to exploit the gravity forces onto the wind guide system and thereby limit or eliminate the need for stronger modules and/or additional structures to support the wind guide system to withstand the wind forces.

Such steel sheet piles should have a maximum width of 2,4m, to be able to be transported in trucks that can transport them through rough roads that typically lead to the sites where wind farms are very commonly located.

Each single sheet pile has typically a vertical height to horizontal width ratio exceeding 6.

Sheet piles should be installed following a specific design where most of the area of the wind guide system is above the ground level. Thus, the area of wind guide system made out of sheet piles that is above the ground should always be larger than the area below the ground level. In the traditional industrial applications of sheet piles, the area of sheet piles that is above or in contact with the ground is larger than the area that is above and not in contact with the ground.

Additionally, in order to comply with Building Code requirements and ensure safety of people and things, the area below the ground should not be lower than one tenth of the overall area of the wind guide system constructed with sheet piles.

Put in other words, the ratio between the area of the wind guide system above the ground level and the area of the wind guide system below the ground level should be lower than 9 and higher than 1.

Steel sheet piles are reusable and recyclable, complying with the objectives of the wind industry as a whole (low cost of energy, low environmental impact, low CO2 emissions).

Using sheet piles to construct wind guide systems, as they can stand vertically with no additional support, they can also minimize land use so that it can be preserved for other uses (e.g.: cultivating crops).

Additionally, there is a rental market for sheet piles, which can be useful for temporary or testing installations as wind guide systems.

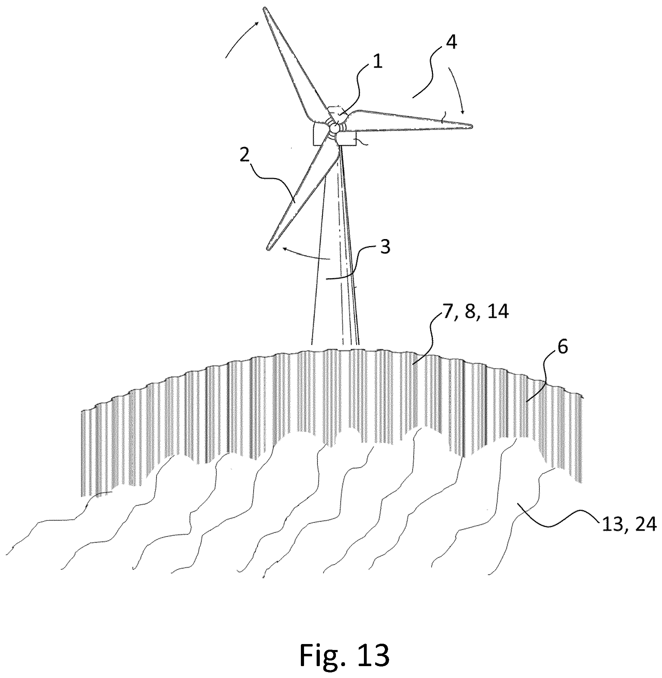

Additionally, the sheet pile realization can adapt well to irregular terrains. Fig. 13 shows a wind guide system at a wind turbine. The wind guide system is built from steel sheet piles, the omega type, and each pile is interlocked to the pile besides. The site where the wind guide system is installed is a very rough terrain site meaning that the site landscape is uneven and it is not flat. The sheet pile and/or the load-bearing pile concept has advantages on a rough terrain site, since piles can easily be installed without smoothing the terrain, which would be necessary when using, for example, shipping containers.

The number of interlocking sheet piles design criteria for the wind guide system to be transported and constructed efficiently with sheet piles will follow the formula below:
Number of sheet piles > (1,3*Turbine_Rotor_Diameter_Length(m))/ 2.4 (m)), with a global minimum of 25.

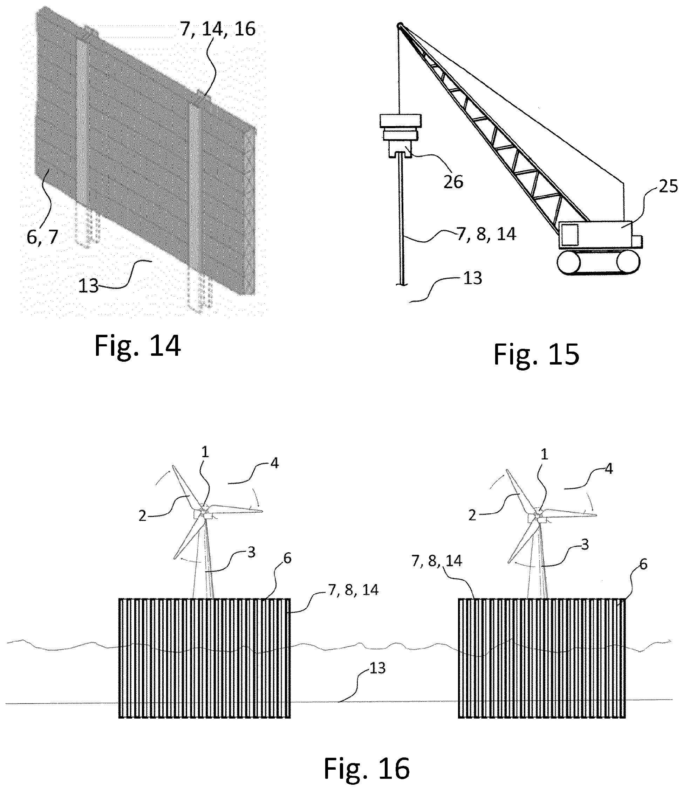

Fig. 15 shows a crane with a big mass unit and a vibration unit and below those units is shown a pile. According to the invention, when installing piles, a process like the one shown in fig. 15 can be used. In case the ground or seabed is relatively soft, the pile can be pressed into the ground or seabed with the mass unit. If the pressing force is not enough, the vibrator unit is used to vibrate the pile into the ground or seabed. This process is commonly used for both sheet piles and Load-Bearing piles. Another process according to the invention is the screwing process to mount a helical pile. A helical pile is a slim deep-foundation underpinning that consists of a steel shaft surrounded by screw-like helical plates or flights. The pile is twisted into the ground or seabed and combines the load-bearing capabilities of skin friction on the shaft and end-bearing on the helix plates. Yet another process according to the invention is drilling a hole in the ground or seabed and mount the pile into the hole afterwards. This concept is especially well suited to be used in mountain areas. Yet another process according to the invention is to dig holes and to cast the ends of the piles into concrete that is filled into the holes, like concrete foundations used in the building industry.

In another realization, referred to as LOAD-BEARING PILE REALIZATION, some of the modules are Load-Bearing piles, potentially standardized, that are anchored in the ground, seabed or floating structure, which are positioned with a horizontal distance between them to form the main load carrying structure to transmit the wind forces into the ground. Such piles sustain other type of modules: vertically or horizontally-installed sheets of sheet material (sheet of sheet material will be referred to as "sheet(s)" in the present application), potentially standardized sheets or sheet piles.

One potential inconvenient of the Sheet Pile Realization is that the geotechnical conditions of the site might not allow to insert sheet piles into the ground due to the presence of rocky or very hard terrain. Thus, it is advantageous to have a realization that is independent from soil conditions. The Load-Bearing Pile Realization consists in Vertical Piles that are either piled directly in the terrain or anchored to the ground through footing foundations or micro-piles. This way it can be installed in any terrain type, even the rocky or very hard one.

Attached to the Load-Bearing piles through nuts and bolts are horizontal or vertical infill sheets. Such sheets might be made out of metal, concrete, wood or composite plastic material. Metal sheets typically made out of steel or aluminium, will typically be Z-shaped, U-shaped or Omega-shaped to improve technical performance. Steel Sheet Piles can also serve as the horizontal or vertical infill sheets. Such sheets and sheet piles can be standardized (i.e.: following known technical standards) and off-the-shelf in the product portfolio of current manufacturers all around the world. One non-limitative example is the steel sheet profile PAL3030.

Steel sheets and steel sheet piles are reusable and recyclable, complying with the objectives of the wind industry as a whole (low cost of energy, low environmental impact, low CO2 emissions).

In still another embodiment of the invention, the wind guide system modules are arranged to form a wind guide system comprising one or more support structures to carry wind loads. The Load-Bearing Pile Realization would be most efficient adding struts, support profiles and St. Andrew crosses stabilizers to minimize the overall cost of the structure in view of its special application, where it is facing the predominant wind direction. The type and number of struts, support profiles and St. Andrew crosses depend on the size of the wind guide system, but an example can be found in Fig. 19.

Fig. 19 shows an example of load-bearing pile realization with footing foundations that anchor the load-bearing piles to the ground. The load-bearing piles support the infill sheets. It also shows a supporting structure consisting of struts supported on an additional foundation, as well as stabilizing elements like the St. Andrews cross.

The number of horizontal or vertical sheet to be transported and constructed efficiently with sheets will follow the formula below:
Number of horizontal or vertical sheets > (1,3*Turbine_Rotor_Diameter_Length(m)*5) / (12(m) * 2.4 (m))), with a global minimum of 10, regardless of the Turbine Rotor Diameter.

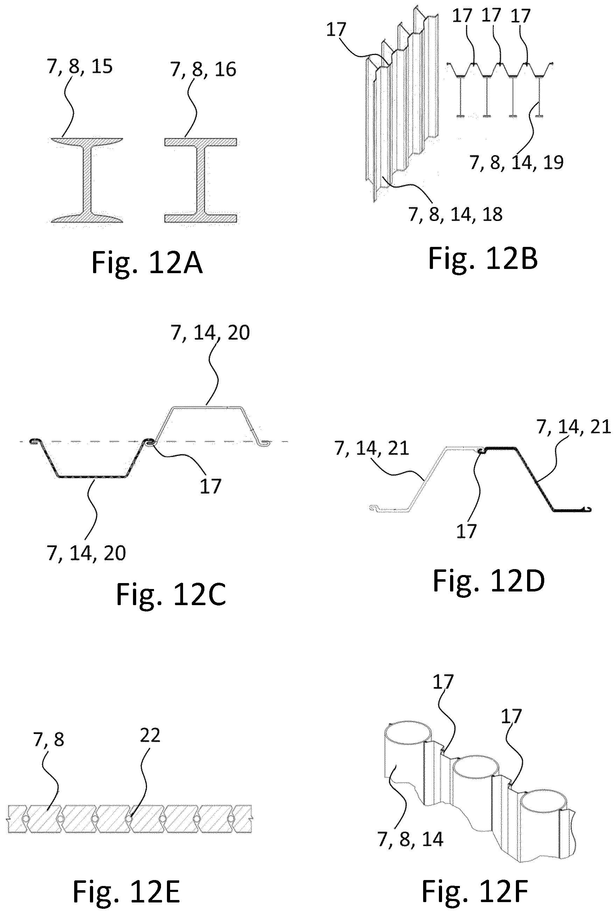

Fig. 12 shows 7 different types of load-bearing piles and sheet piles. In fig. 12A is show the cross section of two steel load-bearing piles, the I-beam cross section profile and the H-beam cross section profile. Those are examples of commonly used load-bearing piles. Other types of steel load-bearing piles are the hollow box and the hollow tubular type. Yet another type is the pipe type that can be filled (typically with concrete) or unfilled and it can be open end or closed end resulting in different advantages/disadvantages when the pile is driven into the ground or seabed. In fig. 12B is shown a cross section and 3D drawing of 4 pieces of assembled profiles comprising a combined Load-Bearing pile and sheet pile solution. It is named Hat + H Profiles and it comprises a combination of a steel sheet pile omega type and a H-beam Load-Bearing type pile. The two piles are interlocked as shown at position 17, resulting in a solid wall structure built from modules. Using this combination results in a relatively strong and stiff wall structure. In fig 12C is shown a cross section of 2 pieces of the very commonly used omega profile steel sheet pile. The two piles are interlocked as shown at position 17, resulting in a solid wall structure built from modules. In fig 12D is shown a cross section of 2 pieces of another very commonly used Z-profile steel sheet pile. The two piles are interlocked as shown at position 17, resulting in a solid wall structure built from modules. In fig 12E is shown a cross section of several concrete Load-Bearing piles. Between the piles are shown some tightening and/or bonding materials to stabilize the structure and to keep it airtight to improve the aerodynamic efficiency of the wind guide system. When needed, this kind if tightening/bonding can be used at all the embodiments of the invention. In fig 12F is shown a 3D drawing of 3 pieces of assembled profiles comprising another type of combined Load-Bearing pile and sheet pile solution. It comprises two omega profile sheet piles in between tubes. The two piles are interlocked as shown at position 17, resulting in a solid wall structure built from modules. Using this combination results in a relatively strong and stiff wall structure.

Fig. 14 shows a part of a wind guide system. It shows two out of several Load-Bearing piles that are partly situated into the ground or seabed. The term pile in this document should be understood to also include the terms post, column, pier, cantilever beam, and pillar where these terms are more appropriate. Between the Load-Bearing piles are situated modules which are forming the wind guide system. In this case these modules are predominantly oriented horizontally. Preferably these modules are made from wood, concrete, or steel.

The load-bearing pile realization provide the possibility to insert consecutive piles with a certain angle in respect to each other, being therefore possible to design the wind guide system with a certain parabolic or at least non-straight shape in Fig. 11.

An additional sub-realization of the STEEL SHEET PILE and LOAD-BEARING PILES Realization is that the sheets in both realizations can be separated easily by gaps between two consecutive sheets to allow the wind guide system to have certain porosity, which, in certain circumstances can be an advantage to reduce loads on the wind guide system, save costs without losing much turbine production and/or to increase visibility through the Wind Guide System. This porosity could span 1%-50%, which would lead to the corresponding gap between consecutive sheets.

In another realization, referred to as the SHIPPING CONTAINER REALIZATION, the modules are standard shipping containers, located on the ground or anchored to a floating structure, attaching to each the consecutive modules to erect a structure with the object of the invention.

In the shipping industry many different containers are used. It could be standard 40 feet containers or standard 20 feet containers which are very commonly used in the shipping industry. For building the wind guide system basically all types of shipping containers can be used. High Cube, flat bed or foldable containers can also be used, just to mention a few. The shipping containers are standardized and manufactured in very large numbers, resulting in relatively cheap structures that can be exploited by building wind guide systems from them. The containers can be new or used. A shipping container that is used for overseas ship transportation has a lifetime of about 18 years. At that time the shipping containers are usually scrapped or sold for other purposes like storage or alternative houses. In a preferred embodiment of this invention used relatively old shipping containers are used to build the wind guide system. The containers are preferably assembled with twist-lock or bolt systems, lashing rods or other standard systems used in the container shipping industry.

Additionally, there is a rental market for shipping containers, which can be useful for temporary or testing installations of such Wind Guide Systems.

In yet another embodiment of the invention, the areas between the shipping containers are tightened with a material to decrease the air leakage of the wind guide system, and thereby increase the aerodynamic efficiency of the Wind guide system.

In yet another embodiment of the invention, at least one of the containers of the wind guide system are filled with a ballast material to improve the wind guide system stability to withstand wind forces. The ballast material could be any material like water, sand, soil, steel, concrete, wood, or straw of any biomass plant products.

The number of shipping containers in the Shipping Container Realization to be transported and constructed efficiently will follow the formula below:
Number of shipping containers > (1,3*Turbine_Rotor_Diameter_Length(m)*5) / (12(m) * 2.4 (m))), with a global minimum of 10, regardless of the Turbine Rotor Diameter.

Fig. 4 shows a wind turbine with a wind guide system, where the wind guide system is built of modules. The modules are substantially equally sized, and they are designed so they can easily be assembled at the wind turbine site. The modules comprise shipping containers.

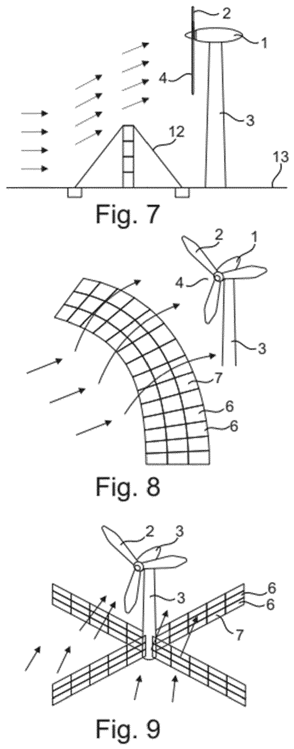

Fig. 7 shows a wind turbine with a substantially vertical wind guide system built of modules like shipping containers, where the wind guide system is positioned in front of the wind turbine and therefore the wind guide system guides the wind towards the wind turbine rotor as shown by arrows in fig. 7. In some cases, the wind guide structure will not be stable towards high wind speeds, and therefore, in some cases, the wind guide system needs to be supported by a support structure. In fig. 7 the wind guide system is supported by one or more support structures. In fig. 7 the wind guide system is a guyed wind guide system structure supported by wires that are anchored into the ground.

In yet another realization, when the previous realizations are implemented, the design of the wind guide system comprising modules can include a gap between the modules to avoid blocking the free access for people, animals, vehicles, cranes, trucks, boats, road transports, paths transports and/or river transports. In yet another realization, the horizontal gap between modules to avoid blocking such free access is covered with a detachable or withdrawable tarpaulin or any other flexible material to allow temporarily such free access.

In another realization, referred to as BALE REALIZATION, the modules are bales that put one on top and beside each other, can erect a structure with the object of the invention.

Fig. 5 shows a wind turbine with a wind guide system, where the wind guide system is built of modules in form of bales. The bales comprise compressed plant material like straw, tree branches, tree leaves or other plant material. Because of the nature of the bales, they can be said to be modules, even though they are not necessarily equally sized. Typically, the width and the height will be very close to the same dimension at different bales, but the length can vary from bale to bale. This is also shown in fig. 5. In a preferred embodiment of the invention, the bales are made for other purposes like feeding cattle, sheep, goats, or pigs. It could also be made for burning in a furnish to generate heat for house heating and/or for generating electricity. In those preferred cases the bales are more or less for free, since they need to be stored somewhere until needed, or they can be used for building a wind guide system first and then be used for the mentioned other purposes later, in some cases several years later.

In order to be cost-efficient in relation to the use of bales, the number of bales in one wind guide system should be higher than the number resulting from this formula:
Number of Bales in a wind guide system = (1.3*Rotor_Diameter_Length (m)*5(m))/(1 (m)*0,36(m)) with a global minimum of 166 bales in each wind guide system regardless of the turbine diameter.

The use of straw bales is advantageous because they reduce the negative visual impact experienced by an observer. Straw bale stacks already exist in large numbers in fields around the world, so the probability of anybody complaining about the visual impact of a bale stack is exceptionally low. Still one more advantage related to the use of bales for making up the wind guide system of the invention is that the bale solution may not need any approval of authorities, since the farmers already make those stacks without any approval.

The integrity of a straw bale stack will be costly to ensure for a long time (max 1-2 years). However, straw bales can be advantageous for testing purposes and short-term installations.

In principle, the bales may be of any type provided they have an approximately parallelepipedal shape, but the use of so-called big bales, medi-big bales, or madras bales is particularly preferred. These bales have a weight above 100, 200, 300, 400, 500, 600, 700, 800, 900, 1000, 1100, 1200, 1300, 1400, 1500, 1600, 1700, 1800, 1900, 2000 kg. Those types of bales are typically extremely hard compressed and therefore particularly good to build a wind guide system. Also, building the wind guide system from large bales will be faster and it can often be done with existing farm lifting equipment.

The bales may comprise, ex. biomass plant products. Biomass is widely used in power plants and for heating purposes. By storing the biomass bales in wind guide structures delay the CO2 emission into the atmosphere and thereby help limit climate changes. Also, using the wind guide system made from bales as a carbon sink may in some cases even result in extra income for the wind turbine owner due to negative carbon taxes.

The bales may comprise straw from barley, rye, oak, rice, corn and wheat Bales comprising those types of straw are very good for stacking to achieve a good structural stability.

A wind guide system made of bales could adopt any configuration provided it is sufficiently stable and capable to withstand the forces caused by the wind. It is particularly useful to have the bales oriented unevenly in the horizontal plane. Preferably some bales are oriented 90 degree angled relative to other bales in the stack. This is to improve the structural stability of the stack. When stacking bales, the time it takes to make the stack can be significantly reduced by stacking several bales in one operation and therefore bale stacks often have all the bales oriented in the same direction which is not optimal structurally.

Also, to improve the structural integrity the bales can be positioned so that they step on the joint of the bales below and thereby improve the structural stability. It is also particularly useful to have the bales oriented differently in the vertical plane, so some bales are positioned with their longest dimension in the vertical direction and thereby improving the structural stability of the bale stack.

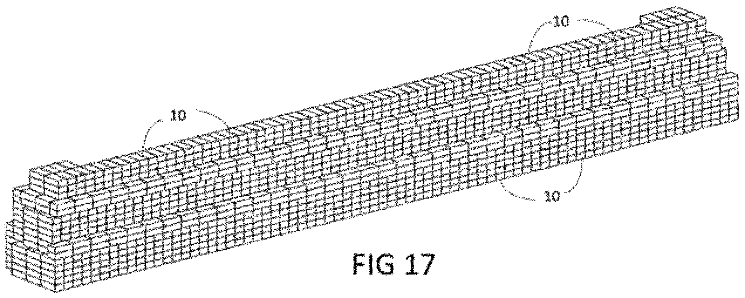

Fig. 17 shows a wind guide system (6) made of equally sized and shaped straw bales (10). Note that this wind guide system (6) has a greater number of bale rows at the bottom than at the top. This configuration is employed for ensuring a correct structural stability. Further, the ends of the wind guide system (6) are thicker in order to withstand the wind loads. Even further, note that the bales (10) making up the wind guide system (6) are not all oriented in the same direction. Orienting the bales longitudinally or transversely depending on the needs allows for building a more stable wind guide system (6).

To further improve the structural stability of the wind guide system made of bales, one or more guides can be provided between the bale stack and the ground. Alternatively, the bales may be structurally connected by structural means to improve the structural integrity. The structural means may comprise screws, ropes, wedges, piles, or any other means capable of structurally connecting the bales. In any of these cases, an improvement of the structural integrity of the bale stack allows for a reduction of the number of bales necessary to design a sufficient structure.

In yet another embodiment of the invention, the bales have a density larger than 0,05, 0,1, 0,2, 0,4, 0,5, 0,6, or 0,7 metric tons per cubic meter. The higher the density of the bale the better. High density result in bales that keeps their shape for a long time and high-density bales also result in more weight to improve the structural integrity by exploiting the gravity forces.

The Bale realization provide the possibility to insert consecutive bales columns with a certain angle in respect to each other, being therefore possible to design the wind guide system with a certain parabolic or at least non-straight shape in Fig. 8.

In yet another embodiment of the invention, a plastic foil and/or tarpaulin covers at least partly the upper surface and/or at least partly the lateral surfaces of said wind guide system made of bales. This embodiment is advantageous because it protects the bales from rain and wind, so that it can increase its lifetime and be able to concentrate wind during longer time. If straw bales are left in the rain, the water will slowly sink into the bales, and they will start to rotten so covering the bales will result in much longer lifetime of the bale stack.

In yet another embodiment of the invention, separators are provided for separating a base of the wind guide system made of bales from the ground. Separating the bale stack from the ground or terrain is advantageous in that the uptake of moisture by the bottom layer of bales is limited. The useful life of the bales can therefore be extended. For example, EURO pallets can be used as separators between the ground and the bottom bales.

In yet another embodiment of the invention, the actual bales are treated with a fire-retardant substance. Alternatively, the plastic foil and/or tarpaulin may be fire resistant. Pyromaniac fires and fires caused by other causes is a major risk for damaging or destroying a bale stack wind guide system.

In yet another embodiment of the invention, the wind guide system comprises at least two different types of modules.

Fig. 6 shows a wind turbine with a wind guide system, where the wind guide system is built of 3 different modules. The main idea to use modules for building the wind guide system is to save costs and time to build the wind guide system. In some cases, it can be an advantage to use 2 or more different modules for this purpose. In a preferred embodiment of the invention, one or more rows of containers are used closest to the ground and one or more rows of fabric structure is used on top of the containers as shown in fig. 6. Containers are good as a solid base close to the ground. Vandalism by people or by animal is not likely to be a problem on containers. Mounting the fabric structures on top of the shipping containers, keep the fabric structure out of reach for people and animals. Shipping containers are likely to be significantly heavier than the fabric structures, so positioning the shipping containers close to the ground will also improve the stability of the entire structure when wind forces are applied to the structure.

In yet another realization, Fig. 9 shows a wind turbine with a substantially vertical wind guide system, where the wind guide system is built of modules. The wind guide system comprises 4 straight parts of the wind guide system to form a cross with the wind turbine in the centre. The 4 parts of the wind guide system can be fixed to the wind turbine tower, or they can be fixed to each other to increase the stability to withstand strong wind forces without or with limited need for extra reinforcements like guyed wires, additional weight inside the preferably bottom containers or other support structures. When using weight inside the containers it could comprise water, sand, soil, concrete, wood, or other material.

In yet another realization, Fig. 16 shows an offshore windfarm and two wind guide systems mounted close to two offshore wind turbines. Using wind guide systems for offshore turbine has certain advantages compared to onshore turbines. The wind profile offshore compared to onshore shows relatively higher wind speed in the lower part below the rotor of the turbine, resulting in a higher potential effect of the wind guide system. Also, the turbulence is much lower offshore than onshore, resulting in relatively big losses in energy production from the offshore wind farm due to wake effects, causing a lower wind park efficiency. A wind guide system mounted just in front of the first or second offshore wind turbine in a big offshore wind farm, will, therefore improve the park efficiency by improving the energy output from the wind turbines just behind the wind turbine with the wind guide system. So due to the extra turbulence generated by the wind guide system and thereby the higher mixing of the wake and the free wind speed, the turbines positioned behind the turbine with the wind guide system, will experience higher wind speed due to the wind guide system. In fig. 16 the wind guide system is made from modules. Hereafter, some wind turbine system dimensional limitations are included to clarify the particularities of the wind guide systems in the present application:
In order for the wind guide system to be effective in increasing wind speed through the rotor of the turbine, it should not be placed more than 5 times the distance between the ground and the low blade tip (low blade tip defined as the height of the blade tip when the blade is located at its lowest position). Research activity based on large-scale experiments and CFD simulation has shown that exceeding such distance would result in significant decrease of the wind speed through the rotor of the turbine and increase of turbulence intensity due to the entry of the wind guide system's wake into the rotor area.

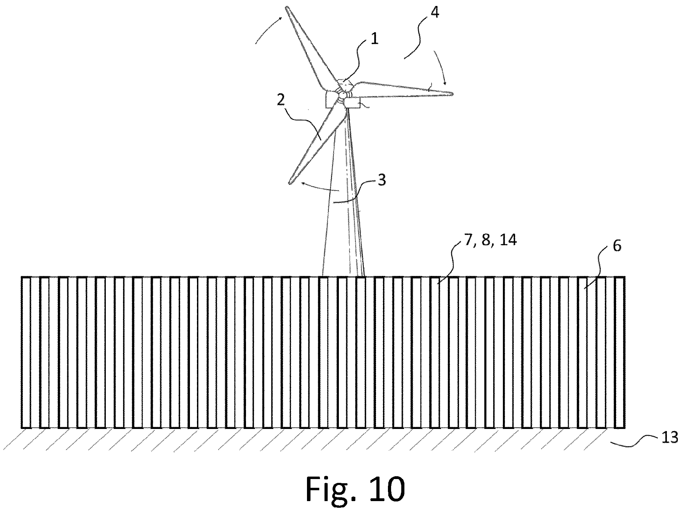

Also, in order for the wind guide system to be effective in increasing wind speed through the rotor of the turbine, the ratio between the wind guide system horizontal length and the wind guide system vertical height should be more than 4. Research activity based on large-scale experiments and CFD simulation has shown that increasing that ratio would lead to a fundamental change in the behaviour of the flow. Instead of being guided upwardly through the rotor of the turbine, a major part of the flow would surround the wind guide system, leading to a much lower aerodynamic efficiency. Fig. 10 shows a wind guide system in front of a wind turbine. The wind guide system is ground- or seabed-based and comprises at least 10 wind guide system modules each having a vertical height exceeding 4 times the horizontal width of the module. The modules are substantially equally sized, and they are designed so they can be easily assembled at the wind turbine site. The modules comprise structural materials like steel, reinforced plastics, concrete, steel reinforced concrete, plants, wood, composite materials, soil, tails, rocks or in any combination of these materials.

In yet another embodiment of the invention, the wind guide system comprises a scaffold built from standard scaffold modules as usually used at buildings ex. when renovating building facades. The scaffold wind guide system also comprises a cover material to achieve the aerodynamic effect wanted with no or low air leakage from the wind guide system.

In yet another embodiment of the invention, the wind guide system is positioned in front of a wind turbine, where the maximum power output of the wind turbine is more than 15, 20, 50, 100, 200, 300, 500, 700, 1000, 2000, 3000, 4000, 5000, 6000, 7000, 8000, 9000, 10000, 11000, 12000 kilowatts.

In yet another embodiment of the invention, the wind guide system is positioned in front of a wind turbine, where the rotor diameter of the wind turbine is more than 40, 50, 60, 70, 80, 90, 100, 110, 120, 130, 140, 150, 160, 170, 180, 190, 200, 210, 220 meters.

## Claims

1. A wind turbine system comprising a wind guide system (6) and a wind turbine (1); the wind guide system (6) comprising modules (7, 8, 9, 10, 11, 14) for guiding the wind in front of the wind turbine (1 ) from a first direction to a second direction; the wind turbine (1) comprising a tower (3) and a rotor provided with a number of rotor blades (2) defining a rotor swept area (4); the wind guide system (6) comprising a ground-based, seabed-based, or floating wind guide with a horizontal length of at least 60 meters, a vertical height of at least 5 meters, a horizontal width and with at least two ends, arranged and configured to receive wind (5) from an altitude below the rotor swept area (4) and to direct the wind (5), so that the second direction of the wind (5) leaving the wind guide system (6) is different than the first direction of the wind (5) received by the wind guide system (6); the wind guide system (6) is arranged and configured to direct the wind (5) to an area in front of and/or behind the rotor swept area (4), **characterised in that** said ground-based, seabed-based, or floating wind guide system (6) comprises at least 10 standardized wind guide system modules of the same type (7, 8, 9, 10, 11, 14).

2. The wind turbine system according to claim 1, **characterised in that** said wind guide system modules (7, 8, 9, 10, 11, 14) are arranged to form a wind guide system (6) angled perpendicular to the ground, seabed or sea surface (13) within the range of +/- 10 degrees.

3. The wind turbine system according to any of the claims 1-2, **characterised in that** the smallest horizontal distance between the wind guide system (6) and the wind turbine tower (3) is less than 5 times the distance between the ground and the low blade tip of the wind turbine.

4. The wind turbine system according to any of the claims 1-3, **characterised in that** the ratio between the wind guide system (6) horizontal length and the wind guide system (6) vertical height is more than 4.

5. The wind turbine system according to any of claims 1-4, **characterised in that** said wind guide system modules (7, 8, 9, 10, 11, 14) comprise a number of shipping containers (9) where the number of shipping containers (9) in one wind guide system (6) is higher than the number resulting from this formula, 0.225 *Rotor_Diameter_Length in meters, which is derived from the formula (1.3*Rotor_Diameter_Length (m) * 5 (m))/(12 (m) * 2.4 (m)), where 1.3*Rotor_Diameter_Length (m) is the minimum preferred total horizontal length of the wind guide system (6), 5 (m) is a minimum preferred vertical height of the wind guide system (6), 12 (m) is the total length of one standard 12m-long shipping container (9) as well as the length of the carrier of a standard truck for shipping container (9) transport and 2.4 (m) is the width of one standard shipping container (9) as well as the width of the carrier of a standard truck for shipping container (9) transport,with a minimum of 10 shipping containers in each wind guide system (6) regardless of the Rotor Diameter Length.

6. The wind turbine system according to any of claims 1-4, **characterised in that** said wind guide system modules (7, 8, 9, 10, 11, 14) comprise plant products that are compressed into bales (10) where the number of bales (10) in one wind guide system (6) is higher than the number resulting from the formula 18*Rotor_Diameter_Length in meters, which is derived from the formula (1.3*Rotor_Diameter_Length (m)*5(m))/(1 (m)*0,36(m)), where 1.3*Rotor_Diameter_Length (m) is a minimum preferred total horizontal length of the wind guide system (6), 5 (m) is a minimum preferred vertical height of the wind guide system (6), 1 (m) is a minimum preferred total length of one bale (10), and 0.36 is a minimum preferred total height of one bale (10),with a minimum of 166 bales (10) in each wind guide system (6) regardless of the Rotor Diameter Length.

7. The wind turbine system according to any of claims 1-4, **characterised in that** said wind guide system modules (7, 8, 9, 10, 11, 14) comprise sheet piles (14, 18, 19, 20,21, 23) that can be driven vertically into the ground where the number of sheet piles (14, 18, 19, 20, 21, 23) in one wind guide system (6) is higher than the number resulting from the formula0.54* Rotor_Diameter_Length expressed in meters, which is derived from the formula, 1.3*Rotor_Diameter_Length (m))/2.4 (m)), where 1.3*Rotor_Diameter_Length (m) is a minimum preferred total horizontal length of the wind guide system (6) and 2.4 (m) is the width of the carrier of a standard truck for steel sheet piles transport, with a minimum of 25 sheet piles (14, 18, 19, 20, 21, 23) in each wind guide system (6) regardless of the Turbine Rotor Diameter Length and where the ratio between the area of the wind guide system above the ground or seabed and the area of the wind guide system below the ground is lower than 9 and higher than 1.

8. The wind turbine system according to any the previous claims, **characterised in that** the wind guide system (6) comprises modules (7, 8, 9, 10, 11, 14) positioned with a horizontal distance between them to avoid blocking the free access for people, animals, vehicles, cranes, trucks, boats, road transports, paths transports and/or river transports.

9. The wind turbine system according to claim 8 , **characterised in that** the horizontal distance between modules (7, 8, 9, 10, 11 , 14) to avoid blocking the free access for people, animals, vehicles, cranes, trucks, boats, road transports, paths transports and/or river transports is covered with a detachable or withdrawable tarpaulin or any other flexible material to allow temporarily such free access.

10. A method for transporting, erecting and assembling a wind guide system (6) being a part of a wind turbine system comprising the wind guide system (6) and a wind turbine (1 ); the wind guide system (6) comprising modules (7, 8, 9, 10, 11 , 14) for guiding the wind (5) in front of the wind turbine (1 ) from a first direction to a second direction; the wind turbine (1 ) comprising a tower (3) and a rotor provided with a number of rotor blades (2) defining a rotor swept area (4). the wind guide system (6) comprising a ground-based, seabed-based, or floating wind guide (6) with a horizontal length of at least 60 meters, a vertical height of at least 5 meters, a horizontal width, and with at least two ends, arranged and configured to receive wind (5) from an altitude below the rotor swept area (4) and to direct said wind (5) so that the second direction of the wind (5) leaving the wind guide system (6) is different than the first direction of the wind (5) received by the wind guide system (6), where the wind guide system (6) is substantially arranged perpendicular to the ground (13) or seabed (13) and it is arranged and configured to direct the wind (5) to an area in front of and/or behind the rotor swept area (4), **characterised in that** the ground-based, seabed-based, or floating wind guide system (6) is transported onsite in standardized trucks and erected on site from at least 10 standardized modules of the same type (7, 8, 9, 10, 11 , 14) with standardized mobile cranes.

## Patentansprüche

1. Windturbinensystem, umfassend ein Windführungssystem (6) und eine Windturbine (1); wobei das Windleitsystem (6) Module (7, 8, 9, 10, 11, 14) zum Führen des Windes vor der Windturbine (1) von einer ersten Richtung in eine zweite Richtung umfasst; wobei die Windturbine (1) einen Turm (3) und einen Rotor umfasst, der mit einer Anzahl von Rotorblättern (2) bereitgestellt ist, die einen von dem Rotor überstrichenen Bereich (4) definieren; wobei das Windführungssystem (6) eine bodengestützte, seebodengestützte oder schwimmende Windführung mit einer horizontalen Länge von mindestens 60 Metern, einer vertikalen Höhe von mindestens 5 Metern, einer horizontalen Breite und mit mindestens zwei Enden umfasst, die angeordnet und dazu konfiguriert ist, Wind (5) aus einer Höhe unterhalb des von dem Rotor überstrichenen Bereichs (4) aufzunehmen und den Wind (5) zu lenken, sodass die zweite Richtung des Windes (5), der das Windführungssystem (6) verlässt, sich von der ersten Richtung des Windes (5) unterscheidet, der von dem Windführungssystem (6) aufgenommen wird; wobei das Windführungssystem (6) angeordnet und dazu konfiguriert ist, den Wind (5) in einen Bereich vor und/oder hinter dem von dem Rotor überstrichenen Bereich (4) zu leiten, **dadurch gekennzeichnet, dass** das bodengestützte, seebodengestützte oder schwimmende Windführungssystem (6) mindestens 10 standardisierte Windführungssystemmodule desselben Typs (7, 8, 9, 10, 11, 14) umfasst.

2. Windturbinensystem nach Anspruch 1, **dadurch gekennzeichnet, dass** die Module des Windführungssystems (7, 8, 9, 10, 11, 14) angeordnet sind, um ein Windführungssystem (6) zu bilden, das senkrecht zu dem Boden, dem Meeresboden oder der Meeresoberfläche (13) innerhalb des Bereichs von **+/-** 10 Grad abgewinkelt ist.

3. Windturbinensystem nach einem der Ansprüche 1 bis 2, **dadurch gekennzeichnet, dass** der kleinste horizontale Abstand zwischen dem Windführungssystem (6) und dem Windturbinenturm (3) weniger als das 5-fache des Abstands zwischen dem Boden und der unteren Blattspitze der Windturbine beträgt.

4. Windturbinensystem nach einem der Ansprüche 1 bis 3, **dadurch gekennzeichnet, dass** das Verhältnis zwischen der horizontalen Länge des Windführungssystems (6) und der vertikalen Höhe des Windführungssystems (6) größer als 4 ist.

5. Windturbinensystem nach einem der Ansprüche 1 bis 4, **dadurch gekennzeichnet, dass** die Module des Windführungssystems (7, 8, 9, 10, 11, 14) eine Anzahl von Schiffscontainern (9) umfassen, wobei die Anzahl der Schiffscontainer (9) in einem Windführungssystem (6) höher ist als die sich aus dieser Formel ergebende Anzahl, 0,225 *Rotor_Durchmesser_Länge in Metern, die abgeleitet ist aus der Formel (1,3*Rotor_Durchmesser_Länge (m) * 5 (m))/(12 (m) * 2,4 (m)) wobei 1,3*Rotor_Durchmesser_Länge (m) die minimale bevorzugte horizontale Gesamtlänge des Windführungssystems (6) ist, 5 (m) eine minimale bevorzugte vertikale Höhe des Windführungssystems (6) ist, 12 (m) die Gesamtlänge eines standardmäßigen 12 m langen Schiffscontainers (9) sowie die Länge des Trägers eines standardmäßigen LKWs für den Transport von Schiffscontainern (9) ist und 2,4 (m) die Breite eines standardmäßigen Schiffscontainers (9) sowie die Breite des Trägers eines standardmäßigen LKWs für den Transport des Schiffscontainers (9) ist, mit einem Minimum von 10 Schiffscontainern in jedem Windführungssystem (6) unabhängig von der Rotordurchmesserlänge.

6. Windturbinensystem nach einem der Ansprüche 1 bis 4, **dadurch gekennzeichnet, dass** die Module des Windführungssystems (7, 8, 9, 10, 11, 14) Pflanzenprodukte umfassen, die zu Ballen (10) gepresst sind, wobei die Anzahl der Ballen (10) in einem Windführungssystem (6) höher ist als die Anzahl, die sich aus der Formel 18*Rotor_Durchmesser_Länge in Metern ergibt, die abgeleitet ist aus der Formel (1,3*Rotor_Durchmesser_Länge (m)*5(m))/(1 (m)*0,36(m)), wobei 1,3*Rotor_Durchmesser_Länge (m) eine minimale bevorzugte horizontale Gesamtlänge des Windführungssystems (6) ist, 5 (m) eine minimale bevorzugte vertikale Höhe des Windführungssystems (6) ist, 1 (m) eine minimale bevorzugte Gesamtlänge eines Ballens (10) ist und 0,36 eine minimale bevorzugte Gesamthöhe eines Ballens (10) ist, mit einem Minimum von 166 Ballen (10) in jedem Windführungssystem (6) unabhängig von der Rotordurchmesserlänge.

7. Windturbinensystem nach einem der Ansprüche 1 bis 4, **dadurch gekennzeichnet, dass** die Module des Windführungssystems (7, 8, 9, 10, 11, 14) Spundbohlen (14, 18, 19, 20, 21, 23) umfassen, die vertikal in den Boden gerammt werden können, wobei die Anzahl der Spundbohlen (14, 18, 19, 20, 21, 23) in dem Windführungssystem (6) höher ist als die Anzahl, die sich aus der Formel 0,54*Rotor_Durchmesser_Länge ausgedrückt in Metern ergibt, die abgeleitet ist aus der Formel 1,3*Rotor_Durchmesser_Länge (m))/2,4 (m)), wobei 1,3*Rotor_Durchmesser_Länge (m) eine bevorzugte minimale horizontale Gesamtlänge des Windführungssystems (6) ist und 2,4 (m) die Breite des Trägers eines standardmäßigen LKWs für den Transport von Stahlspundbohlen ist, mit einem Minimum von 25 Spundbohlen (14, 18, 19, 20, 21, 23) in jedem Windführungssystem (6), unabhängig von der Länge des Turbinenrotordurchmessers, und wobei das Verhältnis zwischen dem Bereich des Windführungssystems über dem Boden oder Meeresboden und dem Bereich des Windführungssystems unter dem Boden kleiner als 9 und größer als 1 ist.

8. Windturbinensystem nach einem der vorstehenden Ansprüche, **dadurch gekennzeichnet, dass** das Windführungssystem (6) Module (7, 8, 9, 10, 11, 14) umfasst, die mit einem horizontalen Abstand zueinander angeordnet sind, um ein Blockieren des freien Zugangs für Menschen, Tiere, Fahrzeuge, Kräne, Lastwagen, Boote, Straßentransporte, Wegtransporte und/oder Flusstransporte zu vermeiden.

9. Windturbinensystem nach Anspruch 8, **dadurch gekennzeichnet, dass** der horizontale Abstand zwischen den Modulen (7, 8, 9, 10, 11, 14), um ein Blockieren des freien Zugangs für Menschen, Tiere, Fahrzeuge, Kräne, Lastwagen, Boote, Straßentransporte, Wegtransporte und/oder Flusstransporte zu vermeiden, mit einer abnehmbaren oder einziehbaren Plane oder einem anderen flexiblen Material abgedeckt ist, um einen solchen freien Zugang vorübergehend zu ermöglichen.

10. Verfahren zum Transportieren, Aufstellen und Montieren eines Windführungssystems (6), das ein Teil eines Windturbinensystems ist, umfassend das Windführungssystem (6) und eine Windturbine (1); wobei das Windführungssystem (6) Module (7, 8, 9, 10, 11, 14) zum Führen des Windes (5) vor der Windturbine (1) von einer ersten Richtung in eine zweite Richtung umfasst; wobei die Windturbine (1) einen Turm (3) und einen Rotor umfasst, der mit einer Anzahl von Rotorblättern (2) bereitgestellt ist, die einen von dem Rotor überstrichenen Bereich (4) definieren, wobei das Windführungssystem (6) eine bodengestützte, meeresbodengestützte oder schwimmende Windführung (6) mit einer horizontalen Länge von mindestens 60 Metern, einer vertikalen Höhe von mindestens 5 Metern, einer horizontalen Breite und mit mindestens zwei Enden umfasst, die angeordnet und dazu konfiguriert ist, Wind (5) aus einer Höhe unterhalb des von dem Rotor überstrichenen Bereichs (4) aufzunehmen und den Wind (5) zu lenken, sodass die zweite Richtung des Windes (5), der das Windführungssystem (6) verlässt, sich von der ersten Richtung des Windes (5) unterscheidet, der von dem Windführungssystem (6) aufgenommen wird; wobei das Windführungssystem (6) im Wesentlichen senkrecht zu dem Boden (13) oder dem Meeresboden (13) angeordnet ist und angeordnet und dazu konfiguriert ist, den Wind (5) in einen Bereich vor und/oder hinter dem von dem Rotor überstrichenen Bereich (4) zu leiten, **dadurch gekennzeichnet, dass** das bodengestützte, meeresbodengestützte oder schwimmende Windführungssystem (6) vor Ort in standardisierten LKWs transportiert und vor Ort aus mindestens 10 standardisierten Modulen des gleichen Typs (7, 8, 9, 10, 11, 14) mit standardisierten Mobilkränen errichtet wird.

## Revendications

1. Système d'éolienne comprenant un système de guidage du vent (6) et une éolienne (1) ; le système de guidage du vent (6) comprenant des modules (7, 8, 9, 10, 11, 14) pour guider le vent devant l'éolienne (1) d'une première direction à une seconde direction ; l'éolienne (1) comprenant une tour (3) et un rotor muni d'un certain nombre de pales de rotor (2) définissant une zone balayée par le rotor (4) ; le système de guidage du vent (6) comprenant un guidage du vent au sol, au fond de la mer ou flottant d'une longueur horizontale d'au moins 60 mètres, d'une hauteur verticale d'au moins 5 mètres, d'une largeur horizontale et d'au moins deux extrémités, disposé et configuré pour recevoir le vent (5) d'une altitude inférieure à la zone balayée par le rotor (4) et pour diriger le vent (5), de sorte que la seconde direction du vent (5) quittant le système de guidage du vent (6) est différente de la première direction du vent (5) reçue par le système de guidage du vent (6) ; le système de guidage du vent (6) est disposé et configuré pour diriger le vent (5) vers une zone devant et/ou derrière la zone balayée par le rotor (4), **caractérisé en ce que** ledit système de guidage du vent au sol, au fond de la mer ou flottant (6) comprend au moins 10 modules de système de guidage du vent normalisés du même type (7, 8, 9, 10, 11, 14).

2. Système d'éolienne selon la revendication 1, **caractérisé en ce que** lesdits modules de système de guidage du vent (7, 8, 9, 10, 11, 14) sont disposés pour former un système de guidage du vent (6) incliné perpendiculairement au sol, au fond de la mer ou à la surface de la mer (13) dans la plage de +/- 10 degrés.

3. Système d'éolienne selon l'une quelconque des revendications 1 et 2, **caractérisé en ce que** la plus petite distance horizontale entre le système de guidage du vent (6) et la tour d'éolienne (3) est inférieure à 5 fois la distance entre le sol et la pointe de pale basse de l'éolienne.

4. Système d'éolienne selon l'une quelconque des revendications 1 à 3, **caractérisé en ce que** le rapport entre la longueur horizontale du système de guidage du vent (6) et la hauteur verticale du système de guidage du vent (6) est supérieur à 4.

5. Système d'éolienne selon l'une quelconque des revendications 1 à 4, **caractérisé en ce que** lesdits modules de système de guidage du vent (7, 8, 9, 10, 11, 14) comprennent un certain nombre de conteneurs d'expédition (9) où le nombre de conteneurs d'expédition (9) dans un système de guidage du vent (6) est supérieur au nombre résultant de cette formule, 0,225 *Rotor_Diamètre_Longueur en mètres, qui est dérivé de la formule (1,3*Rotor_Diamètre_Longueur (m) * 5 (m))/(12 (m) * 2,4 (m)), où 1,3*Rotor_Diamètre_Longueur (m) est la longueur horizontale totale minimale préférée du système de guidage du vent (6), 5 (m) est une hauteur verticale minimale préférée du système de guidage du vent (6), 12 (m) est la longueur totale d'un conteneur d'expédition standard de 12 m de long (9) ainsi que la longueur du transporteur d'un camion standard pour le transport de conteneurs d'expédition (9) et 2,4 (m) est la largeur d'un conteneur d'expédition standard (9) ainsi que la largeur du transporteur d'un camion standard pour le transport de conteneurs d'expédition (9), avec un minimum de 10 conteneurs d'expédition dans chaque système de guidage du vent (6), quelle que soit la longueur du diamètre du rotor.

6. Système d'éolienne selon l'une quelconque des revendications 1 à 4, **caractérisé en ce que** lesdits modules de système de guidage du vent (7, 8, 9, 10, 11, 14) comprennent des produits végétaux qui sont comprimés en balles (10) où le nombre de balles (10) dans un système de guidage du vent (6) est supérieur au nombre résultant de la formule 18*Rotor_Diamètre_Longueur en mètres, qui est dérivée de la formule (1,3*Rotor_Diamètre_Longueur (m)*5(m))/(1 (m)*0,36(m)), où 1,3*Rotor_Diamètre_Longueur (m) est une longueur horizontale totale minimale préférée du système de guidage du vent (6), 5 (m) est une hauteur verticale minimale préférée du système de guidage du vent (6), 1 (m) est une longueur totale minimale préférée d'une balle (10), et 0,36 est une hauteur totale minimale préférée d'une balle (10), avec un minimum de 166 balles (10) dans chaque système de guidage du vent (6) quelle que soit la longueur du diamètre du rotor.

7. Système d'éolienne selon l'une quelconque des revendications 1 à 4, **caractérisé en ce que** lesdits modules de système de guidage du vent (7, 8, 9, 10, 11, 14) comprennent des palplanches (14, 18, 19, 20, 21, 23) qui peuvent être entraînées verticalement dans le sol où le nombre de palplanches (14, 18, 19, 20, 21, 23) dans un système de guidage du vent (6) est supérieur au nombre résultant de la formule 0,54*Rotor_Diamètre_Longueur exprimée en mètres, qui est dérivée de la formule 1,3*Rotor_Diamètre_Longueur (m))/2,4 (m)), où 1,3*Rotor_Diamètre_Longueur (m) est une longueur horizontale totale minimale préférée du système de guidage du vent (6) et 2,4 (m) est la largeur du transporteur d'un camion standard pour le transport de palplanches en acier, avec un minimum de 25 palplanches (14, 18, 19, 20, 21, 23) dans chaque système de guidage du vent (6) quelle que soit la longueur du diamètre du rotor de turbine et où le rapport entre la surface du système de guidage du vent au-dessus du sol ou du fond de la mer et la surface du système de guidage du vent sous le sol est inférieur à 9 et supérieur à 1.

8. Système d'éolienne selon l'une quelconque des revendications précédentes, **caractérisé en ce que** le système de guidage du vent (6) comprend des modules (7, 8, 9, 10, 11, 14) positionnés avec une distance horizontale entre eux pour éviter de bloquer le libre accès pour les personnes, les animaux, les véhicules, les grues, les camions, les bateaux, les transports routiers, les transports par chemins et/ou les transports fluviaux.

9. Système d'éolienne selon la revendication 8, **caractérisé en ce que** la distance horizontale entre les modules (7, 8, 9, 10, 11, 14) pour éviter de bloquer le libre accès des personnes, des animaux, des véhicules, des grues, des camions, des bateaux, des transports routiers, des transports par chemins et/ou des transports fluviaux est recouverte d'une bâche amovible ou rétractable ou de tout autre matériau flexible pour permettre temporairement un tel libre accès.

10. Procédé de transport, de montage et d'assemblage d'un système de guidage du vent (6) faisant partie d'un système d'éolienne comprenant le système de guidage du vent (6) et une éolienne (1) ; le système de guidage du vent (6) comprenant des modules (7, 8, 9, 10, 11, 14) pour guider le vent (5) devant l'éolienne (1) d'une première direction à une seconde direction ; l'éolienne (1) comprenant une tour (3) et un rotor muni d'un certain nombre de pales de rotor (2) définissant une zone balayée par le rotor (4), le système de guidage du vent (6) comprenant un guidage du vent (6) au sol, au fond de la mer ou flottant, d'une longueur horizontale d'au moins 60 mètres, d'une hauteur verticale d'au moins 5 mètres, d'une largeur horizontale et d'au moins deux extrémités, disposé et configuré pour recevoir le vent (5) d'une altitude inférieure à la zone balayée par le rotor (4) et pour diriger ledit vent (5) de sorte que la seconde direction du vent (5) quittant le système de guidage du vent (6) est différente de la première direction du vent (5) reçu par le système de guidage du vent (6), où le système de guidage du vent (6) est sensiblement disposé perpendiculairement au sol (13) ou au fond de la mer (13) et il est disposé et configuré pour diriger le vent (5) vers une zone devant et/ou derrière la zone balayée par le rotor (4), **caractérisé en ce que** le système de guidage du vent (6) au sol, au fond de la mer ou flottant est transporté sur place dans des camions normalisés et érigé sur place à partir d'au moins 10 modules normalisés du même type (7, 8, 9, 10, 11, 14) avec des grues mobiles normalisées.
